(19) **Europäisches Patentamt**
**European Patent Office**
**Office européen des brevets**

(11) **EP 4 682 578 A1**

(12) **EUROPEAN PATENT APPLICATION**

(43) Date of publication:
**21.01.2026 Bulletin 2026/04**

(21) Application number: **25189170.1**

(22) Date of filing: **11.07.2025**

(51) International Patent Classification (IPC):
**G01S 7/48** *(2006.01)*     **G01S 7/481** *(2006.01)*
**G01N 21/25** *(2006.01)*     **G01N 21/27** *(2006.01)*

(52) Cooperative Patent Classification (CPC):
**G01S 7/4802; G01N 21/255; G01S 7/4815;**
G01N 2201/0625; G01N 2201/0627

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.07.2024 JP 2024113347**

(71) Applicant: **Suzuki Motor Corporation**
**Shizuoka 432-8611 (JP)**

(72) Inventors:
• **KONDO, Shinji**
  **HAMAMATSU-SHI, 432-8611 (JP)**
• **KOSUGI, Yukio**
  **KAWASAKI-SHI, 213-0011 (JP)**
• **SEKI, Haruyuki**
  **KAWASAKI-SHI, 213-0011 (JP)**

(74) Representative: **Plasseraud IP**
**104 Rue de Richelieu**
**CS92104**
**75080 Paris Cedex 02 (FR)**

(54) **OBJECT IDENTIFICATION APPARATUS**

(57)     [Problem to be Solved] To provide an object identification apparatus which is advantageous for improvement in identification performance, size reduction, and lowering of cost.

[Solution] The object identification apparatus includes a plurality of light emitting elements that emit, in a predetermined direction, light having different central wavelengths from one another, at least one light receiving element that generates a signal in accordance with an intensity of received light in the predetermined direction, and a control unit that controls light emission periods of the plurality of light emitting elements and extracts a signal component at a wavelength corresponding to each of the plurality of light emitting elements from the signal, the object identification apparatus being configured to identify an object present in the predetermined direction based on reflectance found from the signal component. The control unit includes a pulse modulation part that executes turn-on/off of each of the plurality of light emitting elements simultaneously in parallel in a predetermined modulation pattern in synchronization at a predetermined frequency, and the modulation pattern is defined by an orthogonal matrix in which an array of the plurality of light emitting elements serves as rows and their turn-on/off periods serve as columns.

FIG. 1

EP 4 682 578 A1

## Description

[Technical Field]

The present invention relates to an object identification apparatus.

[Background Art]

As methods for detecting and identifying obstacles, methods for identifying an object based on reflectance of specific wavelengths or in a specific wavelength region of visible light to short-wavelength infrared light, are publicly known.

For example, as an example of using a result of measurement at two wavelengths, the normalized difference human index NDHI is an index for determining presence or absence of human skin based on a normalized difference in reflectance between two wavelengths in the short-wavelength infrared region, and there are also the normalized difference vegetation index NDVI, the normalized difference water index NDWI, and the like.

Patent Literatures 1 and 2 disclose object identification apparatuses for emitting a plurality of types of light having different central wavelengths onto an object to identify the object based on the respective amounts of reflected light (energy).

[Citation List]

[Patent Literature]

[Patent Literature 1] JP 2010-217149 A
[Patent Literature 2] JP 2013-117454 A

[Summary of Invention]

[Problems to be Solved by the Invention]

In a case in which such an object identification apparatus is utilized as an obstacle detection means for a mobile object, for example, a personal mobility device such as an electric wheelchair, it is preferable that measurement data at many wavelengths be able to be acquired so as to identify a wide variety of obstacles such as plants and buildings present in a driving path, in addition to humans and vehicles.

In particular, Patent Literature 1 discriminates an object based on a logical operation of a plurality of normalized difference indices. In this case, simultaneous measurement of reflectances at N wavelengths ($N \geq 3$) is required. Patent Literature 2 modulates a luminance value of a two-wavelength LED by two signals that are orthogonal like a sine function and a cosine function, for example, and are exclusive, but in order to achieve simultaneous measurement at three or more wavelengths, it is required to modulate a light source of a larger number of wavelengths with functions orthogonal to each other and to acquire, in a light receiving mechanism, a detection signal corresponding to a response signal for each modulation signal. This requires the interposition of a bandpass filter depending on the number of wavelengths. Furthermore, since a plurality of LEDs are lit up exclusively, a light emission time (duty ratio) per wavelength decreases as the number of wavelengths increases, which might cause degradation in S/N ratio due to a shortage of the amount of light and degradation in accuracy due to a blur (motion blur) of an object associated with prolonged light emission. In addition, in a case in which Patent Literature 1 is achieved by an individual monitoring system per wavelength, the same number of light receiving elements as the number of wavelengths (LEDs) used are required, which is disadvantageous for size reduction of the device and lowering of cost.

Moreover, a case of utilizing background light alone without using LED light raises a problem in that stable measurement cannot be performed in low light environments such as in interiors and during twilight, and even with sufficient illuminance, a solar spectrum reaching the ground surface varies depending on time of day or the weather, which requires correction of the amount of incident light for each wavelength, resulting in a problem in that a measuring system and a processing method are complicated.

The present invention has been made in view of the circumstances as described above, and an object thereof is to provide an object identification apparatus that can separately detect, using one light receiving element, a large number of wavelength components emitted simultaneously and that is advantageous for adaptability to multiple wavelengths, improvement in identification performance, size reduction, and lowering of cost.

[Means for Solving the Problems]

In order to solve the above-described problems, the present invention is an object identification apparatus including:

a plurality of light emitting elements that radiate in a predetermined direction light having different central wavelengths from one another;

at least one light receiving element that generates a signal in accordance with an intensity of received light in the predetermined direction; and

a control unit that controls light emission periods of the plurality of light emitting elements and extracts a signal component at a wavelength corresponding to each of the plurality of light emitting elements from the signal, the object identification apparatus being configured to identify an object present in the predetermined direction based on reflectance found from the signal component, in which the control unit includes a pulse modulation part that executes turn-on/off of each of the plurality of light emitting elements simultaneously in parallel in a predetermined modulation pattern in synchronization at a predetermined frequency, and the modulation pattern is defined by an orthogonal matrix in which an array of the plurality of light emitting elements serves as rows and their turn-on/off periods serve as columns.

[Advantageous Effects of Invention]

As described above, the object identification apparatus according to the present invention synchronizes a plurality of light emitting elements to emit light simultaneously in parallel in a modulation pattern defined by an orthogonal matrix, whereby respective wavelength components can be detected separately from time-series data simultaneously received by one light receiving element utilizing the modulation pattern to cause the light emitting elements to emit light non-exclusively. Thus, the light emission time (duty ratio) of each of the light emitting elements can be ensured, and it is advantageous for adaptability to multiple wavelengths, improvement in identification performance, size reduction, and lowering of cost.

[Brief Description of Drawings]

[Figure 1] Figure 1 is a block diagram showing an object identification apparatus of an embodiment of the present invention.

[Figure 2] Figure 2 is a timing chart showing a modulation pattern of light emitting elements in the embodiment of the present invention.

[Modes for Carrying Out the Invention]

Hereinafter, embodiments of the present invention will be described in detail with reference to the drawings.

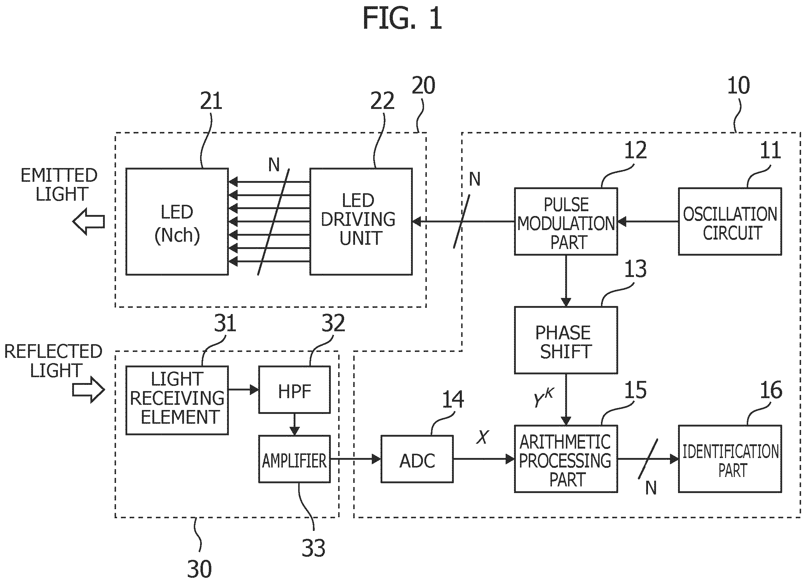

In Figure 1, an object identification apparatus 1 according to an embodiment of the present invention includes a light emitting unit 20 including a plurality of light emitting elements 21 oriented in a predetermined direction and their driving, a light receiving unit 30 including one light receiving element 31 oriented in the same direction, and a control unit 10 that controls light emission timing of each of the light emitting elements 21 and performs arithmetic processing of a signal generated in the light receiving element 31.

The light emitting unit 20 is composed of N light emitting elements 21 (LEDs) that radiate light having different central wavelengths from one another. The respective LEDs are equivalently matched in output and radiation width, and the amount of energy radiated in a predetermined direction is constant at each wavelength. In a suitable embodiment, the light emitting unit 20 is composed of N = seven light emitting elements 21 (an LED 1 to an LED 7), but the number of the light emitting elements 21 is not limited to this.

The control unit 10 is implemented as a single-chip CPU, and includes an oscillation circuit 11 that generates an operation clock (a clock pulse, a pulse width $\Delta t$) in the CPU and a pulse modulation part 12 that generates a modulation signal for turning on/off the light emitting elements 21 (the LED 1 to the LED 7) in synchronization with the operation clock. The modulation signal is given in a modulation pattern defined by an $n \times n$ orthogonal matrix in which an array of the light emitting elements 21 (the LED 1 to the LED 7) serves as rows and in which turn-on/off periods serve as columns. This modulation pattern is stored in a register of the CPU.

The light receiving unit 30 constitutes an analog front end (AFE) including the light receiving element 31 formed of a photodiode (PD) or phototransistor that generates an electric signal in accordance with the intensity of received light, a high-pass filter 32, and a buffer amplifier 33. A DC component derived from background light is removed in the high-pass filter 32 from the electric signal generated in the light receiving element 31, and an analog signal merely including a modulation component derived from reflected light of light radiated from the light emitting elements 21 is converted into a digital signal in an A/D converter 14 of the control unit 10. This digital signal includes n-step time-series data (a signal data series) X ($x_1$ to $x_n$) corresponding to radiation of the light emitting elements 21 (the LED 1 to the LED 7) in one cycle (one sequence).

On the other hand, the pulse modulation part 12 of the control unit 10 generates reference signals $Y^k$ ($Y^{k1}$ to $Y^{kn}$) synchronized with modulation of the light emitting elements 21 (the LED 1 to the LED 7). These reference signals $Y^k$ ($Y^{k1}$ to $Y^{kn}$) are subjected to a phase shift 13 for matching the phase with reflected light according to necessity and multiplied by the signal data series X ($x_1$ to $x_n$) in the arithmetic processing part 15 to calculate modulation components W ($w_1$ to $w_n$) corresponding to the respective wavelengths of the light emitting elements 21 (the LED 1 to the LED 7).

Furthermore, in an identification part 16 of the control unit 10, a normalized index is computed based on reflectance at each wavelength calculated from each of the modulation components W ($w_1$ to $w_n$), and an object present in a predetermined direction is identified from the calculated normalized index and a preset identification condition.

The normalized index, for example, the normalized difference human index NDHI, is expressed by the following equation:

$$NDHI = (R1070 - R1550)/(R1070 + R1550)$$

where R1070 and R1550 are reflectances at wavelengths of 1070 nm and 1550 nm included in the short-wavelength infrared region, and if NDHI > 0.5 holds, it is determined that human skin is present.

The normalized difference vegetation index NDVI and the normalized difference water index NDWI are expressed by the following equations:

$$NDVI = (Rnir1 - Rred)/(Rnir1 + Rred); \text{ and}$$

$$NDWI = (Rgreen - Rnir2)/(Rgreen + Rnir2)$$

where Rnir1 and Rnir2 are reflectances at wavelengths in a specific or certain section of near-infrared ($\lambda$ = 720 to 1200 nm), Rred is reflectance at a wavelength in a specific or certain section of red ($\lambda$ = 620 to 690 nm), and Rgreen is reflectance at a wavelength in a specific or certain section of green ($\lambda$ = 420 to 500 nm).

Next, the modulation pattern of the light emitting elements 21 will be described specifically.

It has been already mentioned that the modulation pattern of the light emitting elements 21 is defined by the $n \times n$ orthogonal matrix. For this $n \times n$ orthogonal matrix, an nth order Hadamard matrix $H_n$ as shown in Expression 1 below can be utilized when a DC component corresponding to background light (Amb) is added to the number of the light emitting elements 21 (the number of wavelengths N) so that n = N + 1 holds. The Hadamard matrix $H_n$ becomes a system of orthogonal functions (orthogonal vectors) in which each row vector ($Y^k$) is a Walsh function sequence and in which any two rows are orthogonal to each other.

[Expression 1]

$$H_n = \frac{1}{\sqrt{2}} \begin{pmatrix} H_{n-1} & H_{n-1} \\ H_{n-1} & -H_{n-1} \end{pmatrix}, \quad H_1 = I_1,$$

where $I_n$ is an $n \times n$ unit matrix

For example, in a case in which the light emitting unit 20 is composed of N = seven light emitting elements 21 (the LED 1 to the LED 7), an eighth-order Hadamard matrix $H_8$ can be utilized for the modulation pattern as shown by Expression 2 below.

[Expression 2]

$$H_8 = \begin{pmatrix} 1 & 1 & 1 & 1 & 1 & 1 & 1 & 1 \\ 1 & -1 & 1 & -1 & 1 & -1 & 1 & -1 \\ 1 & 1 & -1 & -1 & 1 & 1 & -1 & -1 \\ 1 & -1 & -1 & 1 & 1 & -1 & -1 & 1 \\ 1 & 1 & 1 & 1 & -1 & -1 & -1 & -1 \\ 1 & -1 & 1 & -1 & -1 & 1 & -1 & 1 \\ 1 & 1 & -1 & -1 & -1 & -1 & 1 & 1 \\ 1 & -1 & -1 & 1 & -1 & 1 & 1 & -1 \end{pmatrix} = \begin{pmatrix} Y^0 \\ Y^1 \\ Y^2 \\ Y^3 \\ Y^4 \\ Y^5 \\ Y^6 \\ Y^7 \end{pmatrix}$$

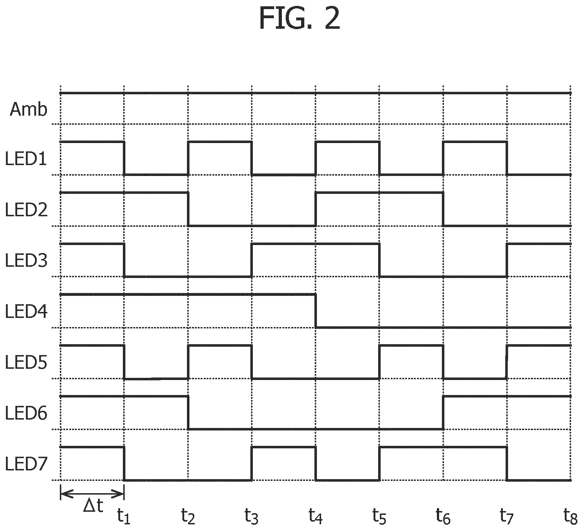

In this case, when the first row is assumed to be background light (Amb), the array of the light emitting elements 21 (the LED 1 to the LED 7) corresponds to the second to seventh rows, "1" of the elements of the matrix corresponds to turn-on (LED on), and "-1" corresponds to turn-off (LED off), and turn-on/off periods t1 to t8 in one cycle (one sequence) correspond to columns, the modulation pattern of the light emitting elements 21 (the LED 1 to the LED 7) is shown in Table 1 below and will be like the timing chart of Figure 2.

[Table 1]

|        | $t_1$ | $t_2$ | $t_3$ | $t_4$ | $t_5$ | $t_6$ | $t_7$ | $t_8$ |
|--------|-------|-------|-------|-------|-------|-------|-------|-------|
| Amb    | 1 | 1 | 1 | 1 | 1 | 1 | 1 | 1 |
| $LED_1$ | 1 | 0 | 1 | 0 | 1 | 0 | 1 | 0 |
| $LED_2$ | 1 | 1 | 0 | 0 | 1 | 1 | 0 | 0 |
| $LED_3$ | 1 | 0 | 0 | 1 | 1 | 0 | 0 | 1 |
| $LED_4$ | 1 | 1 | 1 | 1 | 0 | 0 | 0 | 0 |
| $LED_5$ | 1 | 0 | 1 | 0 | 0 | 1 | 0 | 1 |
| $LED_6$ | 1 | 1 | 0 | 0 | 0 | 0 | 1 | 1 |
| $LED_7$ | 1 | 0 | 0 | 1 | 0 | 1 | 1 | 0 |

The light emitting elements 21 (the LED 1 to the LED 7) are caused to emit light in accordance with the above-described modulation pattern (Hs), and the signal data series X ($x_1$ to $x_8$) corresponding to the intensity of received light obtained in the light receiving element 31 becomes like columns in Table 2 below. Note that, herein, reflectance of the LED 1 was assumed to be 1.0, the amount of energy received by the light receiving element 31 when this LED 1 was on was assumed to be a reference (1.0), and the amount of energy received by the light receiving element 31 from the background light was assumed to be 100.

[Table 2]

Reflectance of Each LED Light and Intensity of Received Light of Sensor

| | Amount of Energy | | | | | | | |
|--------|-------|-------|-------|-------|-------|-------|-------|-------|
|        | $t_1$ | $t_2$ | $t_3$ | $t_4$ | $t_5$ | $t_6$ | $t_7$ | $t_8$ |
| Amb    | 100.0 | 100.0 | 100.0 | 100.0 | 100.0 | 100.0 | 100.0 | 100.0 |
| $LED_1$ | 1.0 | 0.0 | 1.0 | 0.0 | 1.0 | 0.0 | 1.0 | 0.0 |
| $LED_2$ | 0.6 | 0.6 | 0.0 | 0.0 | 0.6 | 0.6 | 0.0 | 0.0 |
| $LED_3$ | 1.0 | 0.0 | 0.0 | 1.0 | 1.0 | 0.0 | 0.0 | 1.0 |
| $LED_4$ | 0.1 | 0.1 | 0.1 | 0.1 | 0.0 | 0.0 | 0.0 | 0.0 |
| $LED_5$ | 0.5 | 0.0 | 0.5 | 0.0 | 0.0 | 0.5 | 0.0 | 0.5 |
| $LED_6$ | 0.7 | 0.7 | 0.0 | 0.0 | 0.0 | 0.0 | 0.7 | 0.7 |

(continued)

Reflectance of Each LED Light and Intensity of Received Light of Sensor

| | Amount of Energy | | | | | | | |
| --- | --- | --- | --- | --- | --- | --- | --- | --- |
| | $t_1$ | $t_2$ | $t_3$ | $t_4$ | $t_5$ | $t_6$ | $t_7$ | $t_8$ |
| $LED_7$ | 0.3 | 0.0 | 0.0 | 0.3 | 0.0 | 0.3 | 0.3 | 0.0 |
| Total (X) | 104.2 | 101.4 | 101.6 | 101.4 | 102.6 | 101.4 | 102.0 | 102.2 |

The modulation components W ($w_0$ to $w_7$) corresponding to the respective wavelengths of the light emitting elements 21 (the LED 1 to the LED 7) in accordance with the above-described modulation pattern ($H_8$) are found as shown in Expression 3 below by linearly transforming the signal data series X ($x_1$ to $x_8$) by the matrix ($H_8$), that is, by multiplying the matrix ($H_8$). Note that $W_0$ represents the amount of energy of the DC component and is the sum of the background light and the DC component of each LED light.

[Expression 3]

$$W = H_8 X$$

$$X = \begin{pmatrix} x_1 & x_2 & x_3 & x_4 & x_5 & x_6 & x_7 & x_8 \end{pmatrix}^t$$

$$W = \begin{pmatrix} w_0 & w_1 & w_2 & w_3 & w_4 & w_5 & w_6 & w_7 \end{pmatrix}^t$$

The orthogonal matrix is a square matrix, an inversion matrix of which is equal to a transposed matrix, and becomes a unit matrix when being multiplied by its transposed matrix. Therefore, when the orthogonal matrix that defines the modulation pattern is multiplied by its transposed matrix (inversion matrix), the unit matrix is obtained. Furthermore, the Hadamard matrix is an orthogonal matrix defined to be a square matrix, elements of which are either "1" or "-1", in which respective rows are orthogonal to one another, and which conforms to its transposed matrix.

Therefore, when the signal data series X ($x_1$ to $x_8$) including the respective wavelength components of the light emitting elements 21 (the LED 1 to the LED 7) modulated by the modulation pattern ($H_8$) defined by the Hadamard matrix is multiplied by the reference signals $Y^k$ corresponding to the original modulation pattern (Hs), which is also a transposed matrix, the amount of received light energy W ($w_0$ to $w_7$) is obtained as a diagonal matrix obtained by multiplying the respective wavelength components by the unit matrix.

The amount of received light energy W ($w_0$ to $w_7$) of each modulation pattern as obtained is shown in the ninth row of Table 3 below, and breakdowns of the respective modulation components are shown in the first to eighth rows.

[Table 3]

Each Amount of Modulation Component Included in Received Light Energy Series X

| | $Y^0$ | $Y^1$ | $Y^2$ | $Y^3$ | $Y^4$ | $Y^5$ | $Y^6$ | $Y^7$ |
| --- | --- | --- | --- | --- | --- | --- | --- | --- |
| Amb | 800.00 | 0.00 | 0.00 | 0.00 | 0.00 | 0.00 | 0.00 | 0.00 |
| $LED_1$ | 4.00 | 4.00 | 0.00 | 0.00 | 0.00 | 0.00 | 0.00 | 0.00 |
| $LED_2$ | 2.40 | 0.00 | 2.40 | 0.00 | 0.00 | 0.00 | 0.00 | 0.00 |
| $LED_3$ | 4.00 | 0.00 | 0.00 | 4.00 | 0.00 | 0.00 | 0.00 | 0.00 |
| $LED_4$ | 0.40 | 0.00 | 0.00 | 0.00 | 0.40 | 0.00 | 0.00 | 0.00 |
| $LED_5$ | 2.00 | 0.00 | 0.00 | 0.00 | 0.00 | 2.00 | 0.00 | 0.00 |
| $LED_6$ | 2.80 | 0.00 | 0.00 | 0.00 | 0.00 | 0.00 | 2.80 | 0.00 |
| $LED_7$ | 1.20 | 0.00 | 0.00 | 0.00 | 0.00 | 0.00 | 0.00 | 1.20 |
| Total ($W_n$) | 816.80 | 4.00 | 2.40 | 4.00 | 0.40 | 2.00 | 2.80 | 1.20 |

As described above, the amount of components of each modulation pattern is four times greater than set reflectance of LED light modulated by each pattern excluding the $Y_0$ component. This corresponds to the fact that the respective light emitting elements 21 (the LED 1 to the LED 7) are all turned on four times in one cycle (one sequence) as shown in Figure 2 and Table 1. In other words, in this embodiment, it is meant that a light emission time (duty ratio) of each of the light emitting elements is four times longer than in a case of exclusively causing each of the same number of light emitting elements to emit light once in a cycle.

Note that although contribution of each LED light to the $Y_0$ component corresponding to the background light (Amb) occurs, this is not an issue because the $Y_0$ component is irrelevant to object identification.

From the above computation, it is understood that components of the respective light emitting elements 21 (the LED 1 to the LED 7) can be separated from the time-series data X ($x_1$ to $x_8$) about the total amount of energy received by one light receiving element 31 and furthermore, can also be separated from the background light (Amb) which is a DC component.

Other Embodiments

Although the above-described embodiment has shown the case in which the eighth-order Hadamard matrix ($H_8$) is utilized for the modulation pattern and in which the light emitting unit 20 is composed of N = seven light emitting elements 21 (the LED 1 to the LED 7), the number of the light emitting elements 21 is not limited to this.

Signal processing similar to the aforementioned embodiment can be performed if a fourth-order Hadamard matrix ($H_4$) shown in Expression 4 below is utilized for the modulation pattern, the light emitting unit 20 is composed of N = three light emitting elements 21 (the LED 1 to the LED 3), and the background light (Amb) is caused to correspond to the first row, for example.

[Expression 4]

$$H_4 = \begin{pmatrix} 1 & 1 & 1 & 1 \\ 1 & -1 & 1 & -1 \\ 1 & 1 & -1 & -1 \\ 1 & -1 & -1 & 1 \end{pmatrix}$$

In contrast, the number of the light emitting elements 21 (LEDs) can be increased further by using a higher-order Hadamard matrix for the modulation pattern. Similar signal processing can be performed by, for example, utilizing a sixteenth-order Hadamard matrix ($H_{16}$) shown in the following expression for the modulation pattern, composing the light emitting unit 20 of N = fifteen light emitting elements 21 (the LED 1 to an LED 15), and causing the background light (Amb) to correspond to the first row. Herein, $H_8$ is an eighth-order Hadamard matrix.

[Expression 5]

$$H_{16} = \begin{pmatrix} H_8 & H_8 \\ H_8 & -H_8 \end{pmatrix}$$

In addition, the number of the light emitting elements 21 (LEDs) can also be increased by providing two or more light receiving elements 31 (the light receiving units 30) having different wavelength regions from each other. For example, by providing two units, each including the pulse modulation part 12, the light emitting unit 20, the light receiving unit 30, and the arithmetic processing part 15, one being a first unit corresponding to the visible light region and the other being a second unit corresponding to the short-wavelength infrared region, the above-described embodiment is adaptable to fourteen types of wavelengths in the case of utilizing the eighth-order Hadamard matrix ($H_8$) for each modulation pattern and six types of wavelengths in the case of utilizing the fourth-order Hadamard matrix ($H_4$).

Each of the above-described embodiments has shown the case in which the Hadamard matrix in which each row vector ($Y^k$) is defined by the Walsh function sequence is used for the modulation pattern, which produces the following advantages:

(i) elements in each row are expressed simply by "1" and "-1", which is advantageous for association with turn-on/off of the light emitting elements (LEDs);
(ii) a high light emission time (duty ratio) of each of the light emitting elements can be ensured; and
(iii) computation of the respective modulation components can easily be executed.

Although the Walsh function sequence has the advantages as described above, the orthogonal function used for the modulation pattern is not limited to this, and another orthogonal function and the light emitting elements (LEDs) can be used in combination.

In addition, although each of the above-described embodiments shows the case in which LEDs are used for the light emitting elements, LDs can also be used for the light emitting elements instead of the LEDs, or the light emitting unit can also be composed of a combination of a strobe discharge tube and a narrow band optical filter or a combination of a halogen lamp, a narrow band optical filter, and a liquid crystal shutter.

Principal Configuration and Effects

As mentioned above, by virtue of the configuration in which multiwavelength (Nch) light emitting elements (LEDs) are modulated in accordance with each basis function of orthogonal functions, thereby separating and extracting the respective wavelength components from time-series data received by one light receiving element simultaneously, the object identification apparatus according to the present invention can extract the amount of signals at respective wavelengths by one light receiving element irrespective of the number of wavelengths of the light emitting elements (LEDs), can be reduced in device size as compared with a case in which a light receiving element is provided per wavelength, and is suitable for utilization for obstacle detection means of a personal mobility device restricted in mounting space, or the like.

Moreover, the object identification apparatus according to the present invention is advantageous in increasing wavelengths as compared to a case in which one light receiving element receives light exclusively in a time-dividing manner, and can ensure a long light emission time (duty ratio) per wavelength, which is advantageous in improving the S/N ratio, and the influence caused by a motion blur can be reduced.

Furthermore, by virtue of an active sensor system through use of LED light, the background light can be removed when the amount of signals at each wavelength is extracted, which enables usage regardless of whether it is night or day and regardless of the weather.

In particular, by virtue of the configuration in which turn-on/off of each of the plurality of light emitting elements (LEDs) is executed simultaneously in parallel in the modulation pattern defined by the orthogonal matrix in which the array of the light emitting elements serve as rows and in which their turn-on/off periods serve as columns, the object identification apparatus according to the present invention can extract a signal component corresponding to each wavelength by arithmetic processing of multiplying the signal data series generated by one light receiving element by the inversion matrix (transposed matrix) of the orthogonal matrix used for modulation, and in addition to the above-described advantage, has an advantage of performing signal processing in a short cycle and in a small number of steps.

Furthermore, by virtue of the configuration in which an imaginary DC component assuming the background light is allocated to the first row of the orthogonal matrix that defines the modulation pattern, a pattern in which all the elements in the first column of the orthogonal matrix have values and in which all the light emitting elements emit light simultaneously, is obtained, which is advantageous in ensuring the duty ratio, and an application range of the orthogonal matrix is broadened as compared with the case of causing the light emitting elements to emit light exclusively, whereby the Hadamard matrix having many benefits in various points can be applied advantageously as the orthogonal matrix.

Although embodiments of the present invention have been described above, the present invention is not limited to the above-described embodiments and can be variously modified and changed within the scope of the claims of the present invention based on the technical concept of the present invention.

[Reference Signs List]

10 Control unit
11 Oscillation circuit
12 Pulse modulation part
13 Phase shift
14 A/D converter
15 Arithmetic processing part
16 Identification part
20 Light emitting unit
21 LED (light emitting element)
22 LED driving unit
30 Light receiving unit
31 Light receiving element

32  High-pass filter
33  Buffer amplifier

**Claims**

1.  An object identification apparatus comprising:

    a plurality of light emitting elements that radiate in a predetermined direction light having different central wavelengths from one another;
    at least one light receiving element that generates a signal in accordance with an intensity of received light in the predetermined direction; and
    a control unit that controls light emission periods of the plurality of light emitting elements and extracts a signal component at a wavelength corresponding to each of the plurality of light emitting elements from the signal,
    the object identification apparatus being configured to identify an object present in the predetermined direction based on reflectance found from the signal component,
    wherein the control unit includes a pulse modulation part that executes turn-on/off of each of the plurality of light emitting elements simultaneously in parallel in a predetermined modulation pattern in synchronization at a predetermined frequency, and the modulation pattern is defined by an orthogonal matrix in which an array of the plurality of light emitting elements serves as rows and their turn-on/off periods serve as columns.

2.  The object identification apparatus according to claim 1, wherein the control unit further includes an arithmetic processing part that multiplies a signal data series generated by the light receiving element in synchronization with the predetermined frequency by an inversion matrix of the orthogonal matrix to calculate the signal component corresponding to each of the plurality of light emitting elements.

3.  The object identification apparatus according to claim 2, wherein in the modulation pattern, a DC component is allocated to a first row of the orthogonal matrix.

4.  The object identification apparatus according to claim 3, wherein the orthogonal matrix that defines the modulation pattern is an Hadamard matrix.

5.  The object identification apparatus according to any one of claims 1 to 4, wherein the control unit further includes an identification part that identifies the object present in the predetermined direction from a normalized index calculated based on reflectance of each of the plurality of wavelengths and a preset identification condition.

# FIG. 1

FIG. 2

Europäisches
Patentamt

European
Patent Office

Office européen
des brevets

# EUROPEAN SEARCH REPORT

**Application Number**

EP 25 18 9170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/309834 A1 (LOOCK HANS-PETER [CA] ET AL) 5 October 2023 (2023-10-05) | 1-4 | INV.<br>G01S7/48 |
| Y | * paragraphs [0017] - [0025], [0030] - [0058] *<br>* figures 1,2,3,5 * | 5 | G01S7/481<br>G01N21/25<br>G01N21/27 |
| | ----- | | |
| A | KR 2020 0004233 A (ELECTRONICS & TELECOMMUNICATIONS RES INST [KR] ET AL.) 13 January 2020 (2020-01-13)<br>* paragraphs [0011] - [0072] *<br>* figures 1-12 * | 1-5 | |
| | ----- | | |
| Y | JP 2010 217149 A (TOKYO INST TECH; SUMITOMO ELECTRIC INDUSTRIES) 30 September 2010 (2010-09-30) | 5 | |
| A | * abstract *<br>* figure 1 * | 1-4 | |
| | ----- | | |

**TECHNICAL FIELDS SEARCHED (IPC)**

G01S
G01N

The present search report has been drawn up for all claims

| Place of search | Date of completion of the search | Examiner |
|---|---|---|
| Munich | 14 November 2025 | Kruck, Peter |

EPO FORM 1503 03.82 (P04C01)

## EP 4 682 578 A1

### ANNEX TO THE EUROPEAN SEARCH REPORT
### ON EUROPEAN PATENT APPLICATION NO.

EP 25 18 9170

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2025

| Patent document cited in search report | Publication date | Patent family member(s) | Publication date |
|---|---|---|---|
| US 2023309834 A1 | 05-10-2023 | NONE | |
| KR 20200004233 A | 13-01-2020 | NONE | |
| JP 2010217149 A | 30-09-2010 | JP 5273667 B2 | 28-08-2013 |
| | | JP 2010217149 A | 30-09-2010 |

EPO FORM P0459

For more details about this annex : see Official Journal of the European Patent Office, No. 12/82

**EP 4 682 578 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010217149 A
- JP 2013117454 A